# EUROPÄISCHE PATENTSCHRIFT

(11) **EP 4 202 291 B1**
(45) Veröffentlichungstag und Bekanntmachung des Hinweises auf die Patenterteilung: **25.06.2025**
(21) Anmeldenummer: 22213985.9
(22) Anmeldetag: 15.12.2022
(51) Int. Cl.: F21S 41/29, F21S 41/255, F21S 41/20

(54) **BELEUCHTUNGSEINRICHTUNG FÜR EIN KRAFTFAHRZEUG UND MONTAGE VON BAUTEILEN DER BELEUCHTUNGSEINRICHTUNG**
LIGHTING DEVICE FOR A MOTOR VEHICLE AND ASSEMBLY OF COMPONENTS OF THE LIGHTING DEVICE
DISPOSITIF D'ÉCLAIRAGE POUR UN VÉHICULE AUTOMOBILE ET MONTAGE DE COMPOSANTS DU DISPOSITIF D'ÉCLAIRAGE

(30) Priorität: 22.12.2021 DE 102021134391
(43) Veröffentlichungstag der Anmeldung: 28.06.2023
(73) Patentinhaber: Marelli Germany GmbH, 72760 Reutlingen (DE)
(72) Erfinder: Stopper, Ralf, 72108 Rottenburg am Neckar (DE); Lange, Christian, 72793 Pfullingen (DE); Lu, Fan, 71034 Böblingen (DE); Pfitzner, Lothar, 72762 Reutlingen (DE); Wagner, Daniel, 72770 Reutlingen (DE)
(74) Vertreter: DREISS Patentanwälte PartG mbB

(56) Entgegenhaltungen:
- EP-A1- 0 936 402
- EP-A1- 2 385 298
- EP-A1- 3 135 535
- CN-A- 111 102 531
- DE-A1- 102004 062 990
- FR-A1- 3 056 700
- GB-A- 191 300 843
- US-B1- 10 378 733

## Beschreibung

Die Erfindung betrifft eine Beleuchtungseinrichtung für ein Kraftfahrzeug, wobei eine erste bauliche Komponente des Lichtmoduls mit einer zweiten baulichen Komponente des Lichtmoduls verbunden ist.

Aus dem Stand der Technik sind Beleuchtungseinrichtungen bekannt, bei denen eine erste bauliche Komponente, beispielsweise eine Abdeckscheibe oder eine Linse, mit einer zweiten baulichen Komponente, beispielsweise einem Gehäuse oder einem Linsenhalter verbunden wird.

Aus der DE 20 2010 003 680 U1 ist beispielsweise eine Beleuchtungseinrichtung bekannt, bei der eine Linse mittels einer Halteklammer an einem Linsenhalter befestigt wird. Darüber hinaus ist es aus dem Stand der Technik bekannt, Linsen mittels Schnapphaken an einem Linsenträgerteil zu befestigen. Bei der Montage wird die Linse von vorne in den Linsenträger mit einer translatorischen Bewegung in den Linsenhalter geschoben. Der Schnapphaken wird zunächst ausgelenkt und hintergreift die Linse anschließend. Linsen aus Kunststoff weisen möglicherweise einen Trenngrat auf. Bei der Montage wird der Schnapphaken über diesen Trenngrat bewegt. Dies kann zu einem Materialabtrag führen, wobei Partikel nachteilig in die Beleuchtungseinrichtung gelangen können.

EP0936402 A offenbart eine Beleuchtungseinrichtung für ein Kraftfahrzeug, wobei die Abdeckung mittels einem Bajonettverschluss an dem Reflektor befestigt ist.

Aufgabe der Erfindung ist es, eine weitere Befestigung und Positionierung einer ersten baulichen Komponente des Lichtmoduls und einer zweiten baulichen Komponente des Lichtmoduls bereitzustellen und die aus dem Stand der Technik bekannten Nachteile zu überwinden.

Diese Aufgabe wird erfindungsgemäß durch die Merkmale des Kennzeichens des Anspruchs 1 gelöst.

Die erste bauliche Komponente ist beispielsweise eine Linse oder eine Abdeckscheibe. Die zweite bauliche Komponente ist beispielsweise ein Linsenträger oder ein Gehäuse, welche Teile der Beleuchtungseinrichtung aufnimmt.

Die erste bauliche Komponente erstreckt sich insbesondere flächig in einer x-y-Ebene. Die Erstreckung der ersten baulichen Komponente in x-Richtung und/oder in y-Richtung ist beispielsweise größer als eine Erstreckung in z-Richtung. Die erste bauliche Komponente kann aber auch eine größere Erstreckung in z-Richtung als in x-Richtung und/oder in y-Richtung aufweisen. Dies kann beispielsweise bei einer Dickwandoptik der Fall sein.

Bei der Montage wird, um die erste bauliche Komponente und die zweite bauliche Komponente in eine Endmontageposition zu bringen, eine Drehbewegung der ersten baulichen Komponente relativ zur zweiten baulichen Komponente ausgeführt. Diese Drehbewegung erfolgt in der x-y-Ebene. Vor der Drehbewegung oder gleichzeitig mit der Drehbewegung kann vorteilhafterweise eine translatorische Bewegung der ersten baulichen Komponente relativ zur zweiten baulichen Komponente in z-Richtung beziehungsweise entgegen der z-Richtung ausgeführt werden.

Die Koppelelemente der zweiten baulichen Komponente, die die erste bauliche Komponente zumindest teilweise hintergreifen, insbesondere übergreifen, sichern die erste und die zweite bauliche Komponente relativ zueinander in z-Richtung.

Gemäß einer Ausführungsform ist vorgesehen, dass die Koppelelemente der zweiten baulichen Komponente zumindest teilweise hakenförmig, insbesondere als Schnapphaken, ausgebildet sind. Die hakenförmige Koppelelemente können bei der Montage der ersten und der zweiten baulichen Komponente zunächst gemäß der Erfindung ausgelenkt werden und anschließend "zurückschnappen" und so in die Endmontageposition gelangen. Die Auslenkung erfolgt in z-Richtung.

Es kann sich als vorteilhaft erweisen, wenn die erste bauliche Komponente wenigstens zwei, bei der Montage mit einem jeweiligen Koppelelement der zweiten baulichen Komponente zusammenwirkende, Führungsrampen umfasst, wobei ein jeweiliges Koppelelement bei der Montage durch eine jeweilige Führungsrampe ausgelenkt wird. Die Auslenkung durch die Führungsrampen erfolgt beispielsweise in z-Richtung.

Es kann sich als vorteilhaft erweisen, wenn die erste bauliche Komponente wenigstens zwei, in der Montageendposition mit einem jeweiligen Koppelelement der zweiten baulichen Komponente zusammenwirkende, Anlageflächen für ein jeweiliges Koppelelement der zweiten baulichen Komponente umfasst. Die Anlagefläche sind beispielsweise gegenüber den Führungsrampen entgegen der z-Richtung zurückversetzt angeordnet. Die Koppelelemente "schnappen" beispielsweise nach der Auslenkung durch die Führungsrampen in Richtung der Anlagefläche zurück.

Gemäß einer Ausführungsform ist vorgesehen, dass die erste bauliche Komponente wenigstens ein Anschlagselement für wenigstens ein Koppelelement der zweiten baulichen Komponente umfasst, wobei das Anschlagselement ein Überdrehen der ersten baulichen Komponente relativ zu der zweiten baulichen Komponente bei der Montage verhindert. Das Anschlagselement springt beispielsweise relativ zu wenigstens einer der Anlagefläche in z-Richtung hervor. Dadurch wird ein "Überdrehen" der ersten baulichen Komponente relativ zu der zweiten baulichen Komponente in x-y-Ebene verhindert. Beispielsweise kann so verhindert werden, dass ein jeweiliges Koppelelement, das bereits in Anlage mit einer jeweiligen Anlagefläche und damit in eine Endmontageposition gelangt ist, über diese Endmontageposition hinaus weiter gedreht wird.

Gemäß einer Ausführungsform ist vorgesehen, dass die erste bauliche Komponente auf einer der zweiten baulichen Komponente zugewandten Seite wenigstens, ein Führungselement, insbesondere eine nach außen gerichtete Führungsfläche umfasst, das bei der Montage mit wenigstens einem Führungselement der zweiten baulichen Komponente zusammenwirkt.

Gemäß der Erfindung ist vorgesehen, dass die zweite bauliche Komponente wenigstens ein Positionierelement umfasst, wobei das Positionierelement die Position der zweiten baulichen Komponente relativ zur ersten baulichen Komponente in der Endmontageposition vorgibt, insbesondere sichert.

Gemäß der Erfindung ist vorgesehen, dass das Positionierelement der zweiten baulichen Komponente ein Rastelement, insbesondere ein Rasthaken ist.

Gemäß einer Ausführungsform ist vorgesehen, dass die erste bauliche Komponente wenigstens ein Positionierelement, insbesondere eine Positionierrippe, umfasst, wobei die Positionierrippe in der Endmontageposition mit dem Positionierelement der zweiten baulichen Komponente zusammenwirkt.

Die erste bauliche Komponente ist beispielsweise eine Linse oder eine Abdeckscheibe mit einem in der x-y-Ebene insbesondere elliptischen oder kreisförmigen Umfang. Die Geometrie der zweiten baulichen Komponente, ein Linsenträger oder ein Gehäuse, ist dementsprechend daran angepasst ausgebildet.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Ausführungsbeispiele der Erfindung sind in den Zeichnungen dargestellt und werden in der nachfolgenden Beschreibung näher erläutert.

In der Zeichnung zeigt:
- Fig. 1: eine erfindungsgemäße Beleuchtungseinrichtung in einer Montagesituation;
- Fig. 2: eine erfindungsgemäße Beleuchtungseinrichtung in einer Endmontageposition;
- Fig. 3: eine Detailansicht der erfindungsgemäßen Beleuchtungseinrichtung aus Fig. 2;
- Fig. 4: die Detailansicht aus Fig. 3 in einer Montagesituation;
- Fig. 5: die Detailansicht aus Fig. 4 in einer Endmontageposition;
- Fig. 6: eine Detailansicht einer zweiten baulichen Komponente der erfindungsgemäßen Beleuchtungseinrichtung;
- Fig. 7: eine Ansicht einer ersten baulichen Komponente der erfindungsgemäßen Beleuchtungseinrichtung;
- Fig. 8: eine weitere Ansicht der ersten baulichen Komponente aus Fig. 7, und
- Fig. 9a bis 9c: Detailansichten der ersten baulichen Komponente aus Fig. 7 und Fig. 8.

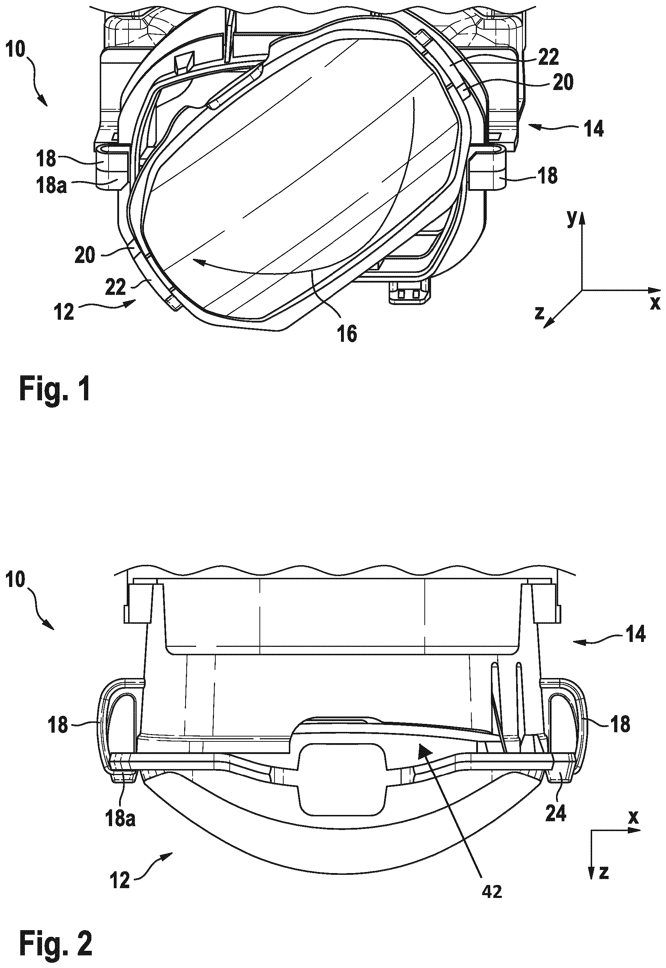

Fig. 1 zeigt eine Beleuchtungseinrichtung 10 in einer Montagesituation. Fig. 2 zeigt die Beleuchtungseinrichtung 10 in einer Montageendposition.

Die Beleuchtungseinrichtung 10 umfasst eine erste bauliche Komponente 12 und eine zweite bauliche Komponente 14.

Die erste bauliche Komponente 12 ist gemäß den dargestellten Ausführungsformen eine Linse.

Die zweite bauliche Komponente 14 ist gemäß den dargestellten Ausführungsformen ein Linsenträger.

Die erste und die zweite bauliche Komponente 12, 14 werden durch einen Drehverschluss aneinander befestigt beziehungsweise mit einander verbunden.

Bei der Montage wird, um die erste bauliche Komponente und die zweite bauliche Komponente in eine Endmontageposition zu bringen, eine Drehbewegung der ersten baulichen Komponente relativ zur zweiten baulichen Komponente ausgeführt. Diese Drehbewegung erfolgt in der x-y-Ebene. Die Drehbewegung ist in Fig. 1 anhand des Pfeils 16 verdeutlicht.

Die zweite bauliche Komponente 14 umfasst gemäß den Ausführungsformen zwei Koppelelemente 18. Es können vorteilhafterweise auch drei oder mehr Koppelelemente 18 vorgesehen werden. Vorteilhafterweise sind zwei Koppelelemente 18 über einen Umfang der zweiten baulichen Komponente 14 in der x-y Ebene sich gegenüberliegend angeordnet.

In der Endmontageposition hintergreifen, insbesondere übergreifen, die Koppelemente 18 die erste bauliche Komponente zumindest teilweise.

Die erste bauliche Komponente 12 gelangt durch eine Drehbewegung relativ zur zweiten baulichen Komponente 14 in diesen Hintergriff, insbesondere Übergriff.

Die Koppelelemente 18 der zweiten baulichen Komponente 14, die die erste bauliche Komponente zumindest teilweise hintergreifen, insbesondere übergreifen, sichern die erste und die zweite bauliche Komponente 12, 14 relativ zueinander in z-Richtung.

Gemäß der dargestellten Ausführungsform sind die Koppelelemente 18 der zweiten baulichen Komponente 14 hakenförmig, insbesondere als Schnapphaken, ausgebildet. Bei der Montage werden hakenförmigen Koppelelemente 18 zunächst ausgelenkt "schnappen" anschließend zurück und gelangen so in die Endmontageposition. Die Auslenkung der Koppelelement 18 erfolgt zumindest in z-Richtung. Gemäß den Ausführungsformen wird zumindest ein sich in der x-y-Ebene erstreckender Teil 18a der Koppelemente 18 bei der Montage in z-Richtung ausgelenkt.

Gemäß der dargestellten Ausführungsform umfasst die erste bauliche Komponente 12 wenigstens zwei, bei der Montage mit einem jeweiligen Koppelelement 18 der zweiten baulichen Komponente 14 zusammenwirkende, Führungsrampen 20. Bei der Montage läuft beim Ausführen der Drehbewegung 16 ein jeweiliges Koppelelement 18 gegen eine jeweilige Führungsrampe 18 an, so dass der Teil 18a eines jeweiligen Koppelelements 18 an der Führungsrampe 20 in z-Richtung ausgelenkt wird.

Beim weiteren Ausführen der Drehbewegung über läuft ein jeweiliges Koppelelement 18 die jeweilige Führungsrampe und gelangt in Anlage mit einer jeweiligen Anlagefläche 22 der ersten Komponente 12.

Die Anlageflächen 22 sind gegenüber den Führungsrampen 20 entgegen der z-Richtung zurückversetzt angeordnet. Die Koppelelemente 18 "schnappen" nach der Auslenkung durch die Führungsrampen 20 in Richtung der Anlageflächen 22 zurück.

Durch die gegen die Anlageflächen 22 anliegenden Koppelelemente 18 wirkt eine Kraft auf die erste bauliche Komponente 12 entgegen der z-Richtung, so dass die erste bauliche Komponente durch den Drehverschluss gegenüber der zweiten baulichen Komponente 14 gesichert ist. Die Auslegung der Koppelelemente 18 ist vorteilhafterweise so umgesetzt, dass zum einen genügend Haltekraft erzeugt wird und gleichzeitig ein Toleranzausgleich stattfinden kann.

Gemäß den Ausführungsformen ist weiter vorgesehen, dass die erste bauliche Komponente 12 zwei Anschlagselemente 24 umfasst. Die Anschlagselemente 24 verhindern ein Überdrehen der ersten baulichen Komponente 12 relativ zu der zweiten baulichen Komponente 14 bei der Montage in Richtung der Drehbewegung 16.

Beispielsweise kann mittels der Anschlagselemente 24 verhindert werden, dass ein jeweiliges Koppelelement 18, das bereits in Anlage mit einer jeweiligen Anlagefläche 22 und damit in eine Endmontageposition gelangt ist, über diese Endmontageposition hinaus weiter gedreht wird.

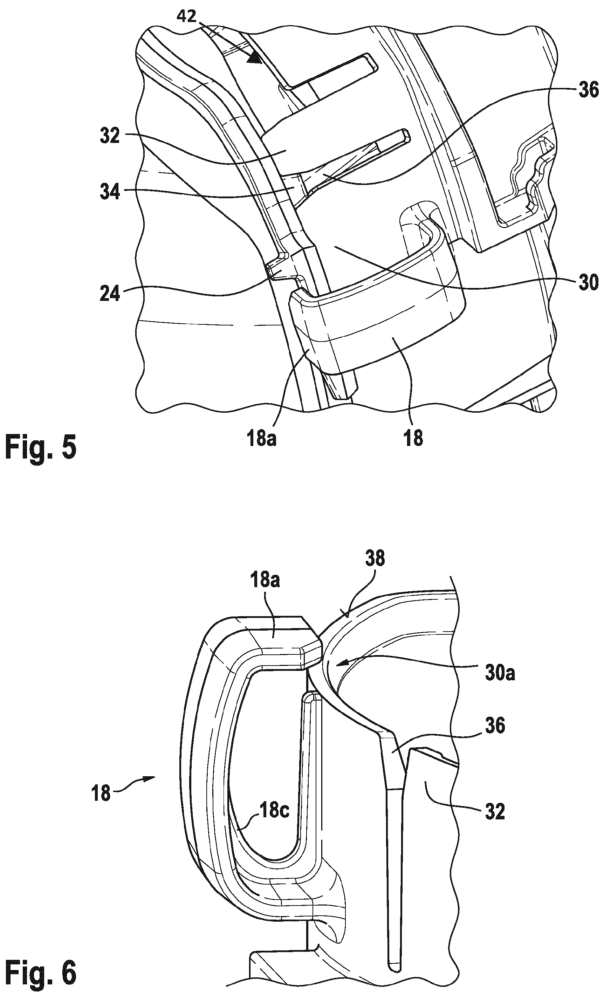

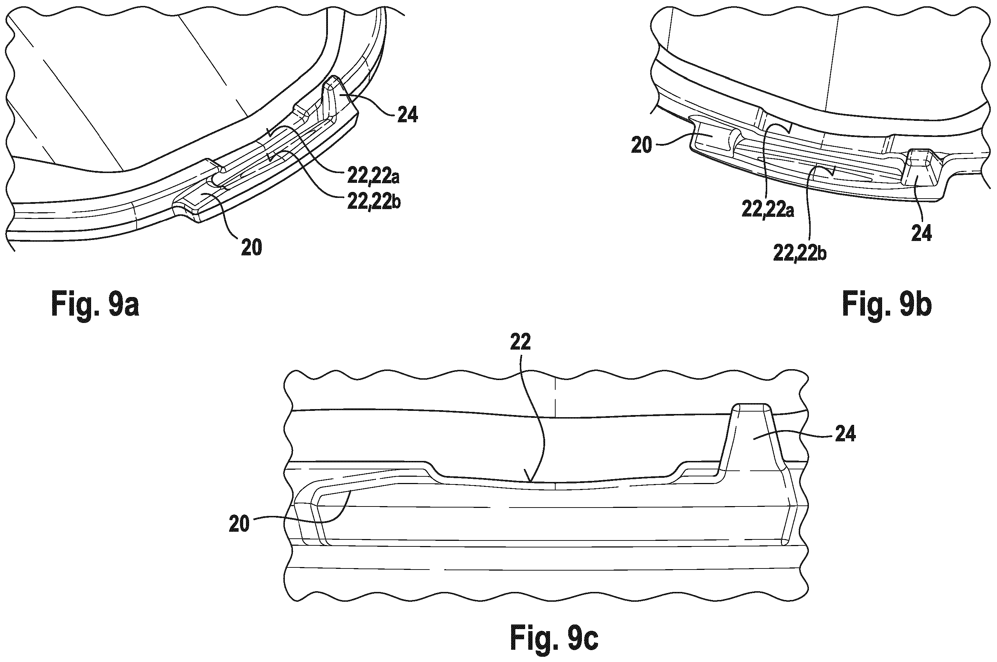

Gemäß der in den Fig. 9a bis 9c dargestellten Ausführungsform kann eine Anlagefläche 22 der ersten bauliche Komponente 12 auch durch zwei Anlageflächen 22a, 22b bereitgestellt werden. Gemäß der dargestellten Ausführungsform sind die Anlageflächen 22a, 22b in z-Richtung versetzt zueinander angeordnet. In Fig. 6 ist ersichtlich, dass das Koppelelement 18 einen Vorsprung 18c umfasst, der im Bereich des Teils 18a mit den beiden Anlagefläche 22a, 22b korrespondiert.

Alternativ zu den beiden in z-Richtung versetzt zueinander angeordneten Anlagenflächen 22a und 22b kann die Anlagefläche 22 auch durch eine einzelne Anlagefläche 22 bereitgestellt werden.

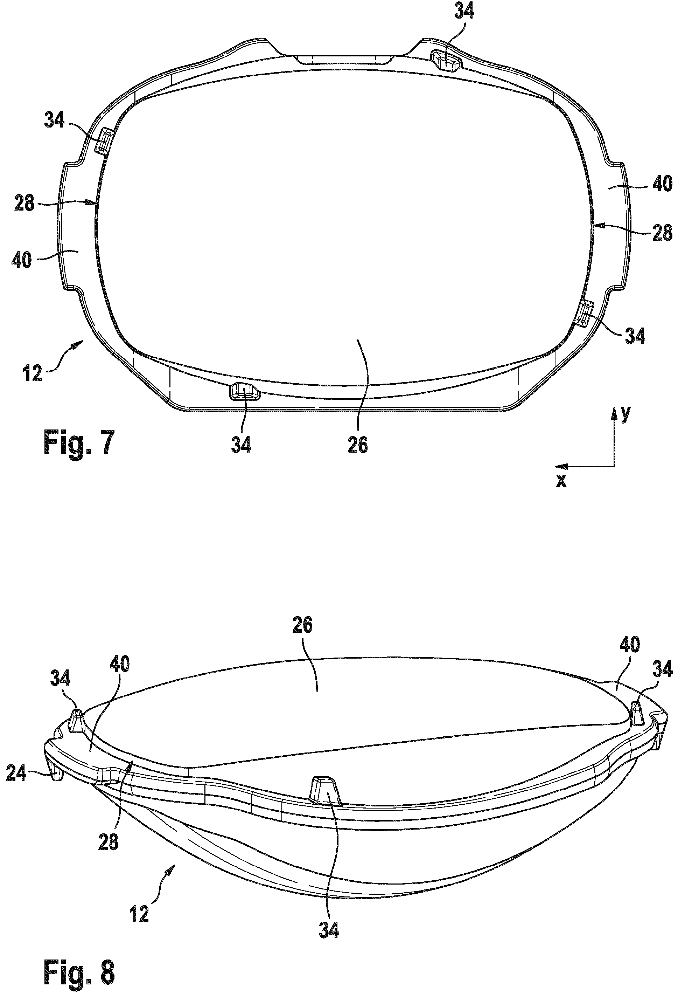

Gemäß den Darstellungen ist vorgesehen, dass die erste bauliche Komponente 12 auf einer der zweiten baulichen Komponente zugewandten Seite 26 wenigstens, ein Führungselement 28, insbesondere eine nach außen gerichtete Führungsfläche 28 umfasst. Bei der Montage wirkt das Führungselement 28 der ersten baulichen Komponente 12 mit wenigstens einem Führungselement 30 der zweiten baulichen Komponente 14 zusammen. Das Führungselement 28 der ersten baulichen Komponente 12 ist beispielsweise in den Figuren 7 und 8 ersichtlich. Bei dem Führungselemente 28 handelt es sich beispielsweise um eine nach außen gerichtete gekrümmte beziehungsweise gebogene Führungsfläche 28 beziehungsweise um einen Flächenabschnitt.

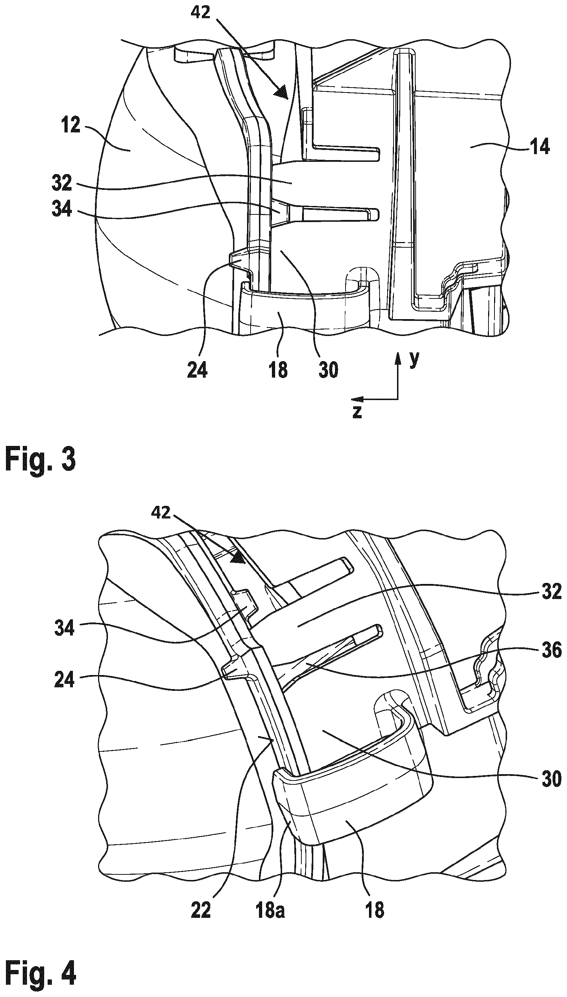

Diese Führungsfläche 28 kontaktiert bei der Montage das Führungselement 30 der zweiten baulichen Komponente 14. Das Führungselement 30 der zweiten baulichen Komponente 14 ist beispielsweise in Figuren 3 bis 5 ersichtlich.

Bei der Montage ist beispielsweise vorgesehen, dass die erste und die zweite bauliche Komponente zunächst in einer translatorischen Bewegung, insbesondere einer Steckbewegung, insbesondere in oder entgegen der z-Richtung relativ zueinander aufeinander zu bewegt werden.

Bei der translatorischen Bewegung gelangt insbesondere eine sich in der x-y-Ebene erstreckende Randfläche 38 der zweiten baulichen Komponente 14, beziehungsweise ein Randflächenabschnitt 38, in Anlage mit einem sich ebenfalls in der x-y-Ebene erstreckenden Flächenabschnitt 40 der ersten baulichen Komponente, vgl. die Figuren 6, 7 und 8.

Dadurch kontaktiert die Führungsfläche 28 ebenfalls das Führungselement 30 der zweiten baulichen Komponente 14.

Die Randfläche 38 der zweiten baulichen Komponente 14, beziehungsweise der Randflächenabschnitt 38 verläuft in der x-y-Ebene nicht über den gesamten Umfang der zweiten baulichen Komponente 14. An einem Rand entlang des Umfangs der zweiten baulichen Komponente 14 ist wenigstens ein Ausschnitt 42, beispielsweise zwei Ausschnitte, die sich beispielsweise über den Umfang der zweiten baulichen Komponente 14 gegenüberliegen, vorgesehen. Durch einen solchen Ausschnitt 42 bzw. solche Ausschnitte umfasst die zweite bauliche Komponente 14 beispielsweise wenigstens einen oder mehrere gegenüber der Randfläche 38 bzw. gegenüber dem Randflächenabschnitt 38 entgegen der z-Richtung zurückversetzten Randausschnitt 42 bzw. Randausschnitte. Somit wird durch die Randfläche 38 keine umlaufende Anlagefläche für die erste bauliche Komponente 12 gebildet. Ein solcher Ausschnitt 42 ist beispielsweise in den Figuren 2 bis 5, in Einbaulage an der Oberseite der zweiten baulichen Komponente 14, gezeigt.

Die erste bauliche Komponente 12 umfasst die Flächenabschnitte 40, die mit einem jeweiligen Randflächenabschnitt 38 der zweiten baulichen Komponente 14 in Anlage gelangen.

Die erste baulichen Komponente 12 erstreckt sich auf der der zweiten baulichen Komponente 14 zugewandten Seite, in der Orientierung der Einbaulage entgegen der z-Richtung entgegen der z-Richtung, über die Flächenabschnitte 40 hinaus. Beispielsweise ist in den Figuren 2, 3, 5, 7 und 8 gezeigt, dass die Linse 14, in der Orientierung der Einbaulage entgegen der z-Richtung, über die Flächenabschnitte 40 hinaus ausgedehnt ist. Die Linse 14 wölbt sich beispielsweise über die Flächenabschnitte 40 hinaus.

Der Ausschnitt 42 bzw. die Ausschnitte der zweiten baulichen Komponente 14 ermöglichen durch den bzw. die gegenüber dem Randflächenabschnitt 38 entgegen der z-Richtung zurückversetzten Randausschnitte 42, dass die Flächenabschnitte 40 der erste baulichen Komponente 12 trotz der Erstreckung der ersten baulichen Komponente 12 über diese Flächenabschnitte 40 hinaus, mit dem Randflächenabschnitt 38 bzw. den Randflächenabschnitten 38 der zweiten baulichen Komponente in Anlage gebracht werden können und die erste und zweite bauliche Komponente montiert werden können.

Anschließend wird die Drehbewegung 16 ausgeführt.

Das Führungselement 30 ist ein gekrümmter beziehungsweise gebogener Randabschnitt 30 der ersten baulichen Komponente, wobei die Führungsfläche 28 bei der Montage eine Innenseite 30a diese Randabschnitts 30 kontaktiert. Bei der Drehbewegung 16 gleitet die Führungsfläche 28 an der Innenseite 30a des Randabschnitts entlang.

Vorteilhafterweise sind bei der ersten baulichen Komponente 12 zwei Führungselemente 28 und bei der zweiten baulichen Komponente 14 dementsprechend zwei Führungselemente 30 vorgesehen. Die Führungselemente 28, 30 sind vorteilhafterweise über einen Umfang der jeweiligen baulichen Komponente 12, 14 in der x-y Ebene sich gegenüberliegend angeordnet. Es können auch mehrere Führungselemente 28, 30 vorgesehen sein. In diesem Fall kann eine gleichmäßige Verteilung der Führungselemente 28, 30 über den jeweiligen Umfang vorteilhaft sein.

Gemäß der Erfindung ist weiter vorgesehen, dass die zweite bauliche Komponente 16 wenigstens ein Positionierelement 32 umfasst, wobei das Positionierelement 32 die Position der zweiten baulichen Komponente relativ zur ersten baulichen Komponente in der Endmontageposition vorgibt, insbesondere sichert. Es können auch zwei oder mehrere solcher Positionierelemente 32 vorgesehen sein. Vorteilhafterweise sind zwei oder mehr Positionierelemente 32 über den Umfang der zweiten baulichen Komponente verteilt angeordnet. Zwei Positionierelemente 32 können beispielsweise gegenüberliegend angeordnet sein. Bei mehreren Positionierelemente 32 kann eine gleichmäßige Verteilung der Positionierelemente 32 über den Umfang vorteilhaft sein.

Gemäß der Erfindung ist vorgesehen, dass das Positionierelement 32 der zweiten baulichen Komponente 14 ein Rastelement 32, insbesondere ein Rasthaken ist. Das Rastelement 32 ist in der x-y-Ebene nach außen auslenkbar.

Gemäß den dargestellten Ausführungsformen ist vorgesehen, dass die erste bauliche Komponente 12 wenigstens ein Positionierelement 34, insbesondere eine Positionierrippe 34, umfasst. Das Positionierelement 34 der ersten baulichen Komponente 12 wirkt mit dem Positionierelement 32 der zweiten baulichen Komponente 14 in der Endmontageposition zusammen. Dies ist beispielsweise in Figuren 3 und 5 dargestellt.

Bei der Montage wird beim Ausführen der Drehbewegung das Positionierelement 32 der zweiten baulichen Komponente 14 an einem jeweiligen Positionierelement 34 der ersten baulichen Komponente 12 in der x-y-Ebene nach außen ausgelenkt und schnappt oder rastet anschließend wieder zurück in die Ausgangsposition, wenn die Drehbewegung 16 weiter ausgeführt wird, vgl. Figuren 4 und 5. In der Endmontageposition ist das Positionierelement 34 der ersten baulichen Komponente 12 in Richtung der Drehbewegung 16 vor dem Positionierelement 32 der zweiten baulichen Komponente 14 angeordnet. Gemäß den Ausführungsformen ist zwischen dem Positionierelement 32 und dem Führungselement 30 der zweiten baulichen Komponente 14 eine Aussparung 36 vorgesehen, in der das Positionierelement 34 der ersten baulichen Komponente 12 in der Endmontageposition angeordnet ist.

Über die Positionierelemente 32, 34 wird eine Positionierung der ersten und der zweiten baulichen Komponente relativ zueinander vorgegeben.

Vorteilhafterweise wird dadurch die erste bauliche Komponente 12 relativ zur zweiten baulichen Komponente 14 zentriert.

Es erweist sich als vorteilhaft, wenn sämtliche beschriebene Element der ersten und/oder der zweiten baulichen Komponente 12, 14 jeweils integrale Elemente der jeweiligen Komponente 12, 14 sind.

Die Fertigung der jeweiligen baulichen Komponente 12, 14 erfolgt beispielsweise in einem Spritzgussverfahren.

Die Figuren zeigen eine erste bauliche Komponente mit einer elliptischen Form in der x-y-Ebene. Die beschriebenen Ausführungsformen können analog auch bei ersten baulichen Komponenten angewandt werden, die eine Kreisform in der x-y-Ebene umfassen.

Wenn in der Beschreibung von einer x-y-Ebene die Rede ist, wird darunter nicht nur eingeschränkt die Koordinatenebene bzw. Ursprungsebene verstanden. Es kann darunter auch, sofern es an der entsprechenden Textstelle Sinn macht, eine dazu parallele Ebene verstanden werden.

## Patentansprüche

1. Beleuchtungseinrichtung (10) für ein Kraftfahrzeug, wobei eine erste bauliche Komponente (12) der Beleuchtungseinrichtung mit einer zweiten baulichen Komponente (14) der Beleuchtungseinrichtung (10) verbunden ist, wobei die Verbindung zwischen der ersten und der zweiten baulichen Komponente (12, 14) durch einen Drehverschluss gebildet ist, wobei die zweite bauliche Komponente (14) wenigstens zwei in einer z-Richtung auslenkbare und die erste bauliche Komponente (12) in einer Endmontageposition zumindest teilweise in der z-Richtung hintergreifende, insbesondere übergreifende, Koppelelemente (18) umfasst, und die erste bauliche Komponente (12) durch eine Drehbewegung (16) in einer x-y-Ebene relativ zur zweiten baulichen Komponente (14) in diesen Hintergriff, insbesondere Übergriff, gelangt, **dadurch gekennzeichnet, dass** die zweite bauliche Komponente (14) wenigstens ein als Rastelement ausgebildetes Positionierelement (32) umfasst, wobei das Positionierelement (32) in der x-y-Ebene nach außen auslenkbar ist und wobei das Positionierelement (32) die Position der zweiten baulichen Komponente (14) relativ zur ersten baulichen Komponente (12) durch Zusammenwirken mit einem Positionierelement (34) der ersten baulichen Komponente (12) in der Endmontageposition vorgibt und sichert,
und wobei die zweite bauliche Komponente wenigstens einen sich in der x-y-Ebene erstreckenden Randflächenabschnitt (38) und wenigstens einen gegenüber dem Randflächenabschnitt (38) entgegen der z-Richtung zurückversetzten Randausschnitt (42) umfasst, und wobei die erste bauliche Komponente wenigstens einen sich in der x-y-Ebene erstreckenden Flächenabschnitt (40), der mit dem Randflächenabschnitt (38) der zweiten baulichen Komponente (14) in Anlage gelangt umfasst, und wobei sich die erste bauliche Komponente (12) auf einer der zweiten baulichen Komponente (14) zugewandten Seite entgegen der z-Richtung über den Flächenabschnitt (40) hinaus erstreckt.

2. Beleuchtungseinrichtung (10) nach Anspruch 1, **dadurch gekennzeichnet, dass** die Koppelelemente (18) der zweiten baulichen Komponente (14) zumindest teilweise hakenförmig, insbesondere als Schnapphaken, ausgebildet sind.

3. Beleuchtungseinrichtung (10) nach einem der Ansprüche 1 oder 2, **dadurch gekennzeichnet, dass** die erste bauliche Komponente (12) wenigstens zwei, bei der Montage mit einem jeweiligen Koppelelement (18) der zweiten baulichen Komponente (14) zusammenwirkende, Führungsrampen (20) umfasst, wobei ein jeweiliges Koppelelement (18, 18a) bei der Montage durch eine jeweilige Führungsrampe (20) ausgelenkt wird.

4. Beleuchtungseinrichtung (10) nach wenigstens einem der vorhergehenden Ansprüche, **dadurch gekennzeichnet, dass** die erste bauliche Komponente (12) wenigstens zwei, in der Montageendposition mit einem jeweiligen Koppelelement (18) der zweiten baulichen Komponente (14) zusammenwirkende, Anlageflächen (22) für ein jeweiliges Koppelelement (18, 18a) der zweiten baulichen Komponente (14) umfasst.

5. Beleuchtungseinrichtung (10) nach wenigstens einem der vorhergehenden Ansprüche, **dadurch gekennzeichnet, dass** die erste bauliche Komponente (12) wenigstens ein, Anschlagselement (24) für wenigstens Koppelelement (18) der zweiten baulichen Komponente (14) umfasst, wobei das Anschlagselement (24) ein Überdrehen der ersten baulichen Komponente (12) relativ zu der zweiten baulichen Komponente (14) bei der Montage verhindert.

6. Beleuchtungseinrichtung (10) nach wenigstens einem der vorhergehenden Ansprüche, **dadurch gekennzeichnet, dass** die erste bauliche Komponente (12) auf einer der zweiten baulichen Komponente (14) zugewandten Seite wenigstens, ein Führungselement (28), insbesondere eine nach außen gerichtete Führungsfläche (28) umfasst, das bei der Montage mit wenigstens einem Führungselement (30, 30a) der zweiten baulichen Komponente (14) zusammenwirkt.

7. Beleuchtungseinrichtung (10) nach wenigstens einem der vorhergehenden Ansprüche, **dadurch gekennzeichnet, dass** das Positionierelement (32) der zweiten baulichen Komponente (14) ein Rasthaken ist.

8. Beleuchtungseinrichtung (10) nach wenigstens einem der vorhergehenden Ansprüche, **dadurch gekennzeichnet, dass** das Positionierelement (34) der ersten baulichen Komponente (12) eine Positionierrippe (34) ist, wobei die Positionierrippe (34) in der Endmontageposition mit dem Positionierelement (32) der zweiten baulichen Komponente (14) zusammenwirkt.

9. Beleuchtungseinrichtung (10) nach einem der vorhergehenden Ansprüche, **dadurch gekennzeichnet, dass** die erste bauliche Komponente (12) als Linse, insbesondere Projektionslinse und die zweite bauliche Komponente (14) als Linsenträger ausgebildet ist.

## Claims

1. Lighting device (10) for a motor vehicle, wherein a first structural component (12) of the lighting device is connected to a second structural component (14) of the lighting device (10), wherein the connection between the first and the second structural component (12, 14) is formed by a rotary lock, wherein the second structural component (14) comprises at least two coupling elements (18) which are deflectable in a z-direction and which, in a final assembly position, at least partially engage behind, in particular overlap, the first structural component (12) in the z-direction, and the first structural component (12) achieves this engagement, in particular overlap, by means of a rotary movement (16) in an x-y plane relative to the second structural component (14), **characterized in that** the second structural component (14) comprises at least one positioning element (32) in the form of a latching element, wherein the positioning element (32) is deflectable outwards in the x-y plane and wherein the positioning element (32) specifies and secures the position of the second structural component (14) relative to the first structural component (12) by interacting with a positioning element (34) of the first structural component (12) in the final assembly position,
and wherein the second structural component comprises at least one edge surface portion (38) extending in the x-y plane and at least one edge cutout (42) set back from the edge surface portion (38) counter to the z direction, and wherein the first structural component comprises at least one surface portion (40) extending in the x-y plane, which comes into contact with the edge surface portion (38) of the second structural component (14), and wherein the first structural component (12) extends beyond the surface portion (40) counter to the z direction on a side facing the second structural component (14).

2. Lighting device (10) according to claim 1, **characterized in that** the coupling elements (18) of the second structural component (14) are designed to be at least partially hook-shaped, in particular as snap hooks.

3. Lighting device (10) according to claim 1 or claim 2, **characterized in that** the first structural component (12) comprises at least two guide ramps (20) which interact with a corresponding coupling element (18) of the second structural component (14) during assembly, wherein a corresponding coupling element (18, 18a) is deflected by a corresponding guide ramp (20) during assembly.

4. Lighting device (10) according to at least one of the preceding claims, **characterized in that** the first structural component (12) comprises at least two contact surfaces (22) for a corresponding coupling element (18, 18a) of the second structural component (14), said contact surfaces interacting with a corresponding coupling element (18) of the second structural component (14) in the final assembly position.

5. Lighting device (10) according to at least one of the preceding claims, **characterized in that** the first structural component (12) comprises at least one stop element (24) for at least the coupling element (18) of the second structural component (14), wherein the stop element (24) prevents over-rotation of the first structural component (12) relative to the second structural component (14) during assembly.

6. Lighting device (10) according to at least one of the preceding claims, **characterized in that** the first structural component (12) comprises at least one guide element (28), in particular an outwardly directed guide surface (28), on a side facing the second structural component (14), which guide element interacts with at least one guide element (30, 30a) of the second structural component (14) during assembly.

7. Lighting device (10) according to at least one of the preceding claims, **characterized in that** the positioning element (32) of the second structural component (14) is a latching hook.

8. Lighting device (10) according to at least one of the preceding claims, **characterized in that** the positioning element (34) of the first structural component (12) is a positioning rib (34), wherein the positioning rib (34) interacts with the positioning element (32) of the second structural component (14) in the final assembly position.

9. Lighting device (10) according to any of the preceding claims, **characterized in that** the first structural component (12) is in the form of a lens, in particular a projection lens, and the second structural component (14) is in the form of a lens carrier.

## Revendications

1. Dispositif d'éclairage (10) pour un véhicule automobile, dans lequel un premier composant constructif (12) du dispositif d'éclairage est relié à un deuxième composant constructif (14) du dispositif d'éclairage (10), dans lequel la liaison entre les premier et deuxième composants constructifs (12, 14) est réalisée par une fermeture rotative, dans lequel le deuxième composant constructif (14) comprend au moins deux éléments d'accouplement (18) aptes à être déviés dans une direction z et s'engageant, dans une position finale de montage, au moins partiellement derrière le premier composant constructif (12) dans la direction z, en particulier sur celui-ci, et le premier composant constructif (12) vient dans cette prise de derrière, en particulier de dessus, par un mouvement de rotation (16) dans un plan x-y par rapport au deuxième composant constructif (14), **caractérisé par le fait que** le deuxième composant constructif (14) comprend au moins un élément de positionnement (32) conçu comme élément d'arrêt, dans lequel ledit élément de positionnement (32) est déviable vers l'extérieur dans le plan x-y et dans lequel ledit élément de positionnement (32) spécifie et fixe la position du deuxième composant constructif (14) par rapport au premier composant constructif (12) en agissant de concert avec un élément de positionnement (34) du premier composant constructif (12) dans la position finale de montage,
et dans lequel le deuxième composant constructif comprend au moins une section de surface de bord (38) s'étendant dans le plan x-y et au moins une découpe de bord (42) en retrait par rapport à la section de surface de bord (38) à l'encontre de la direction z, et dans lequel le premier composant constructif comprend au moins une section de surface (40) s'étendant dans le plan x-y, qui vient en appui sur la section de surface de bord (38) du deuxième composant constructif (14), et dans lequel le premier composant constructif (12) s'étend au-delà de la section de surface (40) à l'encontre de la direction z sur un côté montrant vers le deuxième composant constructif (14).

2. Dispositif d'éclairage (10) selon la revendication 1, **caractérisé par le fait que** les éléments d'accouplement (18) du deuxième composant constructif (14) sont réalisés au moins en partie en forme de crochet, en particulier en tant que mousqueton.

3. Dispositif d'éclairage (10) selon l'une quelconque des revendications 1 ou 2, **caractérisé par le fait que** le premier composant constructif (12) comprend au moins deux rampes de guidage (20) qui agissent de concert avec un élément d'accouplement (18) respectif du deuxième composant constructif (14) lors du montage, dans lequel un élément d'accouplement (18, 18a) respectif est dévié par une rampe de guidage (20) respective lors du montage.

4. Dispositif d'éclairage (10) selon au moins l'une quelconque des revendications précédentes, **caractérisé par le fait que** le premier composant constructif (12) comprend au moins deux surfaces d'appui (22) pour un élément de couplage (18, 18a) respectif du deuxième composant constructif (14), qui agissent de concert avec un élément d'accouplement (18) respectif du deuxième composant constructif (14) dans la position finale de montage.

5. Dispositif d'éclairage (10) selon au moins l'une quelconque des revendications précédentes, **caractérisé par le fait que** le premier composant constructif (12) comprend au moins un élément de butée (24) pour au moins un élément d'accouplement (18) du deuxième composant constructif (14), dans lequel ledit élément de butée (24) empêche une rotation excessive du premier composant constructif (12) par rapport au deuxième composant constructif (14) lors du montage.

6. Dispositif d'éclairage (10) selon au moins l'une quelconque des revendications précédentes, **caractérisé par le fait que** le premier composant constructif (12) comprend, sur un côté tourné vers le deuxième composant constructif (14), au moins un élément de guidage (28), en particulier une surface de guidage (28) dirigée vers l'extérieur, qui agit de concert avec au moins un élément de guidage (30, 30a) du deuxième composant constructif (14) lors du montage.

7. Dispositif d'éclairage (10) selon au moins l'une quelconque des revendications précédentes, **caractérisé par le fait que** l'élément de positionnement (32) du deuxième composant constructif (14) est un crochet d'arrêt.

8. Dispositif d'éclairage (10) selon au moins l'une quelconque des revendications précédentes, **caractérisé par le fait que** l'élément de positionnement (34) du premier composant constructif (12) est une nervure de positionnement (34), dans lequel la nervure de positionnement (34) agit de concert avec l'élément de positionnement (32) du deuxième composant constructif (14) dans la position finale de montage.

9. Dispositif d'éclairage (10) selon l'une quelconque des revendications précédentes, **caractérisé par le fait que** le premier composant constructif (12) est conçu en tant que lentille, en particulier en tant que lentille de projection, et le deuxième composant constructif (14) est conçu en tant que support de lentille.
